(19) Europäisches Patentamt
European Patent Office
Office européen des brevets

(11) **EP 1 546 645 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
***G01B 9/00*** *(2006.01)*  ***G01B 11/00*** *(2006.01)*

(21) Anmeldenummer: **03727156.6**

(22) Anmeldetag: **28.03.2003**

(86) Internationale Anmeldenummer:
**PCT/DE2003/001029**

(87) Internationale Veröffentlichungsnummer:
**WO 2004/029543 (08.04.2004 Gazette 2004/15)**

(54) **INTERFEROMETRISCHE MESSEINRICHTUNG**

INTERFEROMETRIC MEASURING DEVICE

DISPOSITIF DE MESURE INTERFEROMETRIQUE

(84) Benannte Vertragsstaaten:
**CH DE FR GB IT LI**

(30) Priorität: **25.09.2002 DE 10244552**

(43) Veröffentlichungstag der Anmeldung:
**29.06.2005 Patentblatt 2005/26**

(73) Patentinhaber: **ROBERT BOSCH GMBH**
**70442 Stuttgart (DE)**

(72) Erfinder:
• **MARCHAL, Dominique**
**1337 Vallorbe (CH)**
• **DUVOISIN, Marc-Henri**
**1028 Préverenges (CH)**
• **BREIDER, Dominique**
**CH-1112 Echichens (CH)**
• **DRABAREK, Pawel**
**75233 Tiefenbronn (DE)**

(56) Entgegenhaltungen:
**US-A- 5 891 747**      **US-A1- 2002 109 847**

• **PATENT ABSTRACTS OF JAPAN vol. 008, no. 179 (P-295), 17. August 1984 (1984-08-17) & JP 59 072005 A (NIPPON DENKI KK), 23. April 1984 (1984-04-23)**

## Beschreibung

Die Erfindung bezieht sich auf eine interferometrische Messvorrichtung zum Erfassen der Form, der Rauheit oder des Abstandes der Oberfläche eines Messobjektes mit einem Modulationsinterferometer, dem von einer Strahlungsquelle kurzkohärente Strahlung zugeführt wird und das einen ersten Strahlteiler zum Aufteilen der zugeführten Strahlung in einen über einen ersten Arm geführten ersten Teilstrahl und einen über einen zweiten Arm geführten zweiten Teilstrahl aufweist, von denen der eine gegenüber dem anderen mittels einer Modulationseinrichtung in seiner Licht-Phase oder Lichtfrequenz verschoben wird und eine Verzögerungsstrecke durchläuft, und die anschließend an einem weiteren Strahlteiler des Modulationsinterferomters vereinigt werden, mit einer von dem Modulationsinterferometer räumlich getrennten und mit diesem über eine Lichtleitfaseranordnung gekoppelten oder koppelbaren Messsonde, in der die vereinigten Teilstrahlen in einem gemeinsamen Arm in einem teildurchlässigen Bereich in einen Messstrahl und einen Referenzstrahl aufgeteilt und wonach der an der Oberfläche reflektierte Messstrahl und der an einer Referenzebene reflektierte Referenzstrahl überlagert werden, und mit einer Empfängervorrichtung und einer Auswerteinheit zum Umwandeln der ihr zugeleiteten Strahlung in elektrische Signale und zum Auswerten der Signale auf der Grundlage einer Phasendifferenz.

## Stand der Technik

Eine derartige interferometrische Messeinrichtung ist in der DE 198 19 762 A1 angegeben. Bei dieser bekannten Messeinrichtung ist ein Teil, das sogenannte Modulationsinterferometer, räumlich von der eigentlichen Messsonde getrennt und mit dieser optisch über eine Lichtleitfaseranordnung verbunden, so dass die Messsonde an sich als relativ einfach aufgebaute, leicht handhabbare Einheit ausgeführt werden kann. Dem Modulationsinterferometer wird eine breitbandige, kurzkohärente Strahlung zugeführt, die am Eingang des Modulationsinterferometers mittels eines Strahlteilers in zwei Teilstrahlen aufgeteilt wird, von denen der eine gegenüber dem anderen mittels einer Modulationseinrichtung, beispielsweise einem akustooptischen Modulator, in seiner Licht-Phase oder Licht-Frequenz verschoben wird. Einer der beiden Teilstrahlen durchläuft in dem Modulationsinterferometer ein Verzögerungselement, das eine optische Wegdifferenz der beiden Teilstrahlen erzeugt, die größer ist als die Kohärenzlänge der kurzkohärenten Strahlung. In der Messsonde wird in einem Messzweig bezüglich eines Referenzzweigs eine weitere optische Wegdifferenz in der Weise erzeugt, dass die durch das Verzögerungselement bewirkte Wegdifferenz kompensiert wird und somit eine Interferenz der von der Referenzebene des Referenzzweigs kommenden Referenzstrahlung und der von der Objektoberfläche in dem Messzweig zurückkommenden Strahlung entsteht, die nachfolgend ausgewertet wird, um die gewünschte Oberflächeneigenschaft (Form, Rauhigkeit, Abstand) über eine Phasenauswertung zu ermitteln. In der Messsonde sind der Messzweig und der Referenzzweig bei einem Ausführungsbeispiel in einem gemeinsamen Lichtweg (common path) angeordnet, wobei zum Bilden des Messzweiges und des Referenzzweiges ein teildurchlässiges optisches Element vorgesehen ist.

Eine ähnliche interferometrische Messeinrichtung mit einem derartigen Modulationsferometer und einer daran über eine Lichtleitfaseranordnung angeschlossenen Messsonde ist auch in der DE 198 08 273 A1 angegeben, wobei mittels einer Empfängervorrichtung in einer Strahlzerlegungs- und Strahlempfangseinheit eine Aufspaltung der zur Interferenz gebrachten Strahlung in Strahlungsanteile unterschiedlicher Wellenlängen erfolgt, um daraus eine synthetische Wellenlänge zu bilden und den Messbereich (Eindeutigkeitsbereich) zu vergrößern.

Bei den vorstehend genannten interferometrischen Messeinrichtungen, die auf dem Prinzip der Heterodyninterferometrie beruhen, aber die Eigenschaften einer breitbandigen, kurzkohärenten Strahlung ausnutzen, weist das als Mach-Zehnder-Interferometer ausgebildete Modulationsinterferometer eine Anordnung klassischer optischer Bauteile auf, wie eine vor dem eingangsseitigen Strahlteiler liegende Kollimationsoptik, den eingangsseitigen und ausgangsseitigen Strahlteiler und Umlenkspiegel. Die Teilstrahlen erfahren dabei mehrere Reflexionen an den Strahlteilerflächen und an den Spiegeln, bevor sie in die optische Lichtleiterfaseranordnung eingekoppelt werden. Die optischen Bauelemente müssen mit hoher Genauigkeit positioniert werden, da jeder Winkelfehler sich bei der Reflexion doppelt auswirkt. Dabei ist eine dauerhafte Justierung schwer sicher zu stellen. Auch im Zusammenhang mit der Einfügung einer Glasplatte zum Ausgleich von optischen Unsymmetrien können sich zusätzliche Schwierigkeiten bei der Justierung ergeben. Mit diesen Schwierigkeiten ist ein aufwendiger Aufbau verbunden, wobei außerdem eine genaue Anpassung an die Eigenschaften der Messsonde erforderlich ist.

Der Erfindung liegt die Aufgabe zugrunde, eine interferometrische Messeinrichtung der eingangs genannten Art bereitzustellen, die mit vereinfachtem Aufbau eine möglichst hohe Messgenauigkeit erreichen lässt.

## Vorteile der Erfindung

Diese Aufgabe wird mit den Merkmalen des Anspruchs 1 gelöst. Hiernach ist vorgesehen, dass der teildurchlässige Bereich mittels einer bezüglich der optischen Sondenachse unter einem Austrittswinkel schrägen Austrittsfläche einer Sondenfaser und einer ebenfalls bezüglich der optischen Sondenachse unter einem Eintrittswinkel schrägen Eintrittsfläche eines objektseitig folgenden Faserabschnitts gebildet ist, wobei zwischen der Austrittsfläche und der Eintrittsfläche ein keilförmiger Spalt gebildet ist.

Mit diesen Maßnahmen ergibt sich ein ähnlicher Effekt wie mit einer teildurchlässigen bzw. teilreflektierenden Beschichtung in dem teildurchlässigen Bereich. Durch die Schrägflächen in Verbindung mit der nummerischen Apertur können dabei die Eigenschaften der zu der Oberfläche des Messobjektes durchgelassenen und von dieser kommenden sowie der in dem teildurchlässigen Bereich reflektierten Strahlungsanteile in geeigneter Weise zum Erzielen optimal auswertbarer Interferenzmuster beeinflusst werden.

Zu einer möglichst guten Funktion tragen dabei die Maßnahmen bei, dass die Austrittsfläche und die Eintrittsfläche in gleicher Richtung bezüglich der Sondenachse geneigt sind, sowie weiterhin die Maßnahmen, dass der Austrittswinkel und der Eintrittswinkel so gewählt sind, dass eine Fresnel-Reflexion bewirkt wird.

Eine für die Funktion vorteilhafte Ausgestaltung besteht darin, dass der Austrittswinkel $\alpha$ zwischen 5° und 8° und der Eintrittswinkel zwischen $\alpha$ und 0° beträgt.

Der Aufbau und die Justierung werden dadurch begünstigt, dass die Sondenfaser und der Faserabschnitt in einer röhrchenförmigen Aufnahme axial ausgerichtet aufgenommen sind, die von einem äußeren Tubus der Messsonde umgeben ist.

Die Maßnahmen, dass auf der von dem Messobjekt abgelegenen Stirnseite der Aufnahme ein die Sondenfaser umgebenden, ebenfalls zu dem Tubus konzentrisch aufgenommenes Positionierstück vorgesehen ist und dass der Faserabschnitt in dem objektseitigen, vorderen Teil der Aufnahme und die Sondenfaser in dem objektabgelegenen, hinteren Teil der Aufnahme und/ oder dem Tubus fixiert ist, begünstigen den Aufbau und eine genaue Justierung, wie auch die weiteren Maßnahmen, dass der vordere Teil der Aufnahme von dem hinteren Teil der Aufnahme durch diametral gegenüberliegende Spalte getrennt ist, wobei der eine Spalte rückseitig in Verlängerung der schrägen Austrittsfläche der Sondenfaser und der andere Spalt vorderseitig in der Verlängerung der schrägen Eintrittsfläche begrenzt sind, und dass der vordere Teil und der hintere Teil der Aufnahme von einem gemeinsamen hülsenförmigen Haltering umgeben sind, der auf seiner Außenseite von dem Tubus umgeben ist.

Für den Aufbau und die Funktionsweise sind weiterhin die Maßnahmen vorteilhaft, dass ein vorderer Abschnitt des Faserabschnittes gegenüber dessen hinterem Abschnitt einen geringeren Durchmesser besitzt. Eine genaue Messung wird dadurch unterstützt, dass eine objektseitige Austrittsfläche des Faserabschnittes unter einem Austrittswinkel von mindestens 46° gegenüber der Achsnormalen geneigt ist. Durch die Wahl der Neigung der objektseitigen Austrittsfläche kann das Messergebnis ebenfalls günstig beeinflusst werden.

Zu einem vorteilhaften Aufbau tragen weiterhin die Maßnahmen bei, dass das Modulationsinterferometer zumindest teilweise eine polarisationserhaltende lichtleitende Struktur in Form eines optischen Faserleiters oder einer integrierten Optik aufweist, wobei die lichtleitende Struktur zumindest eines Arms aufgetrennt ist.

Zeichnung

Die Erfindung wird nachfolgend anhand von Ausführungsbeispielen unter Bezugnahme auf die Zeichnungen näher erläutert. Es zeigen:

Fig. 1    eine schematische Darstellung eines Gesamtaufbaus einer interferometrischen Messeinrichtung mit Modulationsinterferometer und Messsonde,

Fig. 2    eine nähere Ausgestaltung des in Fig. 1 gezeigten Modulations-interferometers,

Fig. 3    die Messsonde und das Messobjekt in seitlicher Ansicht mit Darstellung des Strahlungsversatzes,

Fig. 4    eine schematische Darstellung eines Faserteils der Messsonde in seitlicher Ansicht,

Fig. 5    den vorderen Abschnitt der Messsonde in schematischer seitlicher Darstellung und

Fig. 6    ein weiteres Ausführungsbeispiel des vorderen Abschnittes der Messsonde in schematischer seitlicher Darstellung.

Ausführungsbeispiel

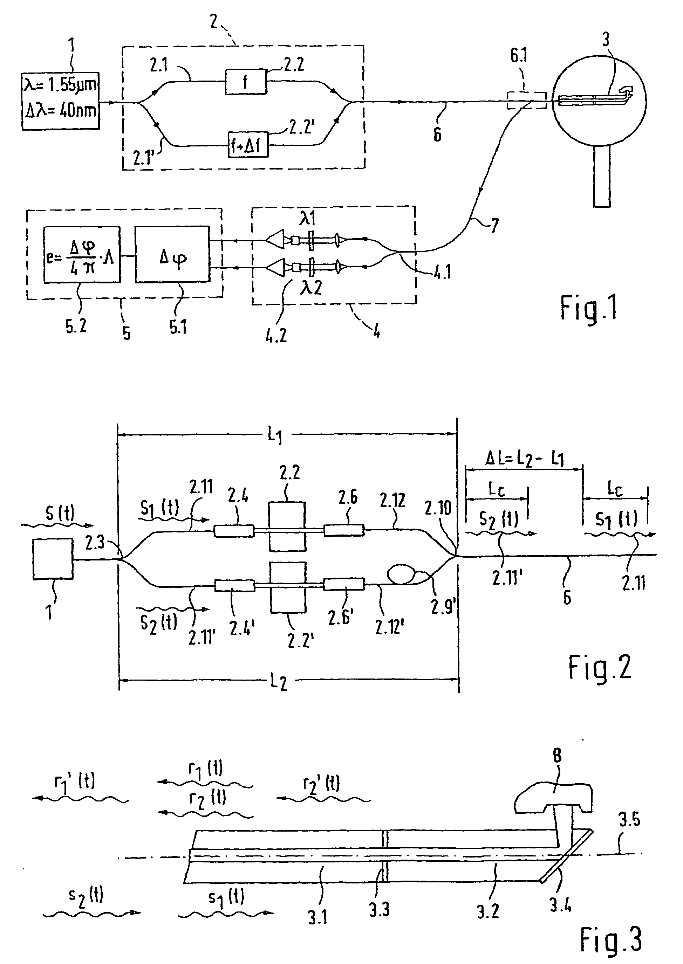

Wie Fig. 1 zeigt, weist die auf dem Prinzip der Heterodyninterferometrie beruhende interferometrische Messeinrichtung eine breitbandige, kurzkohärente Lichtquelle 1 auf, deren Strahlung einem sogenannten Modulationsinterferometer 2 zugeführt wird. In dem Modulationsinterferometer 2, das in Fig. 2 näher dargestellt ist, wird die Strahlung s(t) an einem ersten Strahlteiler 2.3 in einen über einen ersten Arm geführten ersten Teilstrahl 2.1 mit einer Teitstrahlung $s_1(t)$ und einen über einen zweiten Arm geführten zweiten Teilstrahl 2.1' mit einer Teilstrahlung $s_2(t)$ aufgeteilt und ausgangsseitig an einem weiteren Strahlteiler 2.10 wieder zusammengeführt und von dort über eine Lichtleitfaseranordnung 6 in eine entfernte Messsonde 3 geleitet. Von der Messsonde 3, die z.B. als Fizeau-Interferomter oder Mirau-Interferometer aufgebaut ist, wie in den eingangs genannten Druckschriften näher erläutert, gelangt die Strahlung anschließend über eine weitere Lichtleitfaseranordnung 7 in eine Empfängervorrichtung 4 mit einer Strahlzerlegungseinheit 4.1 und anschließenden photoelektrischen Empfängern 4.2, in denen eine Umwandlung in elektrische Signale erfolgt. In einer anschließenden Auswerteeinheit 5 mit Phasendetektor 5.1 und Recheneinheit 5.2 werden dann die mittels der Messsonde 3 aufgenommenen Eigenschaften der Messoberfläche (z.B. Rauhigkeit, Form, Abstände) ermittelt.

Das Modulationsinterferometer 2 ist als Mach-Zehnder-Interferometer aufgebaut, wobei die beiden Arme im Anschluss an den ersten Strahlteiler 2.3 erste bzw. zweite eingangsseitige Lichtleitfasern 2.11, 2.11' und erste bzw. zweite ausgangsseitige Lichtleitfasern 2.12, 2.12' aufweisen, die zu dem weiteren Strahlteiler 2.10 führen. Der erste Strahlteiler 2.3 ist dabei in einem Faserlichtleiter ausgebildet, mit dem die von der Lichtquelle 1 kommende Strahlung herangeführt wird. Am Ausgang des so gebildeten Kopplers werden die Teilstrahlen mittels linsenartiger Koppelelemente 2.4, 2.4' kollimiert, und die beiden kollimierten Teilstrahlen durchlaufen eine erste bzw. zweite Modulationseinheit 2.2, 2.2', beispielsweise in Form eines akustooptischen Modulators, eines faseroptischen Piezomodulators oder eines thermischen Phasenmodulators, wobei die Modulationseinheiten 2.2, 2.2' vorteilhaft auch als integrierte optische Bauteile ausgebildet sein können. Um die chromatische Dispersion zu korrigieren, durchläuft zumindest einer der Teilstrahlen 2.1, 2.1' eine Glasplatte, die in einer ersten bzw. zweiten Lichtstrecke angeordnet ist. Die Wahl zur Anordnung der Glasplatte und/oder auch deren Dicke bestimmt sich durch Rechnung. Im weiteren Verlauf werden der erste Teilstrahl 2.1 und der zweite Teilstrahl 2.1' auf ein erstes bzw. zweites linsenartiges Lichtleitelement 2.6, 2.6' geleitet und in die erste bzw. zweite ausgangsseitige Lichtleitfaser 2.12, 2.12' eingekoppelt. Die erste oder die zweite ausgangsseitige Lichtleitfaser 2.12, 2.12' besitzt eine größere optische Weglänge als die andere Lichtleitfaser in dem Ausmaß, dass der optische Wegunterschied $\Delta L = L_2 - L_1$ zwischen den beiden Armen größer ist als die Kohärenzlänge der kurzkohärenten Strahlung s(t) nach Durchlaufen der Filter. Eines der linsenartigen Koppelelemente 2.4, 2.4' oder der Lichtleitelemente 2.6, 2.6', beispielsweise das Lichtleitelement 2.6' kann an einer Justiervorrichtung befestigt sein, mit der die optische Wegdifferenz $\Delta L$ von Hand oder mit einem Motor z.B. unter Benutzung eines Mikrometertisches in der Weise verstellt werden kann, dass die Wegdifferenz $\Delta L$ zwischen den beiden Armen auf diejenige der Messsonde 3 abgestimmt wird, um mit der Messsonde 3 eine Interferenz zu bewirken. Die verwendeten Lichtleitphasern 2.11, 2.11', 2.12, 2.12' sind monomod. Außerdem sind sie vorteilhafterweise polarisationserhaltend, insbesondere, wenn die Lichtquelle 1 polarisiert ist und/oder wenn die Modulationseinheiten 2.2, 2.2' aus doppelbrechenden Kristallen gebildet sind und/oder wenn die Montage an den Koppelstellen keine befriedigende Stabilität bezüglich der Polarisationsrichtungen in den beiden Interferometerarmen ergibt. Zum Erzielen der optischen Wegdifferenz ist beispielsweise in der zweiten ausgangsseitigen Lichtleitfaser 2.1 2' ein optischer Umweg 2.9' vorgesehen.

Die zum Aufnehmen der Objektoberfläche dienende Sonde 3, die beispielsweise als Fizeau-Interferometer oder Mirau-Interferometer aufgebaut ist, weist einen Referenzzweig mit einer Referenzebene und einen zu der Objektoberfläche führenden Messzweig auf, deren optischen Wegdifferenzen so gewählt sind, dass die in dem Modulationsinterferometer 2 erzeugte optische Wegdifferenz kompensiert wird, so dass der von der Objektoberfläche kommende Messstrahl und der von der Referenzebene kommende Referenzstrahl bei ihrer Überlagerung interferieren. Die interferierende Strahlung wird zur spektralen Aufteilung in Anteile unterschiedlicher Wellenlängen der Strahlzerlegungseinheit 4.1 und anschließend den zugeordneten photoelektrischen Empfängern 4.2 zugeführt. Aus der interferierenden Strahlung und den daraus gewonnen elektrischen Signalen wird durch Auswertung der Phasendifferenzen die gewünschte Oberflächeneigenschaft mittels des Phasendetektors 5.1 und der anschließenden Recheneinheit 5.2 ermittelt. Dabei entsteht die ausgewertete Phasendifferenz durch die mit der ersten und/ oder zweiten Modulationseinheit 2.2, 2.2' erzeugte Frequenzdifferenz, die entsprechend dem Heterodynverfahren bezogen auf die Grundfrequenz relativ gering ist. Die Berechnung erfolgt aufgrund der Beziehung:

$$\Delta\varphi = 2\pi \cdot (2e / \Lambda) + \varphi_o$$

wobei

$\varphi_o$ eine Konstante,

$\Lambda = \lambda_1 \cdot \lambda_2 / (\lambda_2 - \lambda_1)$ synthetische Wellenlänge der Messvorrichtung

$\lambda_1$ Wellenlänge an einem ersten photoelektrischen Empfänger

$\lambda_2$ Wellenlänge an einem zweiten photoelektrischen Empfänger

e Messabstand

sind. Daraus wird mittels der Auswerteeinheit 5 der jeweils erfasste Abstand der Oberfläche an einer Messstelle bestimmt aus der Beziehung:

$$e = \Delta\varphi/(2\pi) \cdot (\Lambda/2).$$

Das Abstandsmaß e wird also bestimmt aus einer Messung der Phase zwischen zwei elektrischen Signalen, wodurch die Messung unabhängig von der durch die Photodioden empfangenen optischen Intensität ist.

Fig. 3 zeigt einen Faserteil der Messsonde, ausgeführt als Mirau-Interferometer mit einer monomoden Lichtleitfaser, und die Wegverschiebungen der ankommenden $s_2(t)$ und $s_1(t)$ sowie der von der Oberfläche des Messobjektes 8 und einem teildurchlässigen Bereich 3.3 zwischen einer objektseitigen Austrittsfläche 3.31 einer Sondenfaser 3.1 und einer objektabgelegenen Eintrittsfläche 3.32 eines Faserabschnittes 3.2 zurücklaufenden Strahlungsanteile $r_1'(t)$, $r_1(t)$, $r_2(t)$ und $r_2'(t)$. Die zurücklaufenden Strahlungsanteile $r_1'(t)$ und $r_1(t)$ ergeben sich

dabei aus derjenigen Strahlung $s_1(t)$, die den Zweig des Modulationsinterferometers 2 ohne Umweg durchlaufen haben, wobei der Strahlungsanteil $r_1'(t)$ von dem teildurchlässigen Bereich 3.3 und der Strahlungsanteil $r_1(t)$ von der Oberfläche des Messobjektes 8 reflektiert werden. Die zurücklaufenden Strahlungsanteile $r_2(t)$ und $r_2'(t)$ hingegen ergeben sich aus derjenigen Strahlung $s_2(t)$ des Modulationsinterferometers 2, die den optischen Umweg durchlaufen hat, wobei der zurücklaufende Strahlungsanteil $r_2(t)$ an dem teildurchlässigen Bereich 3.3 und der zurücklaufende Strahlungsanteil $r_2'(t)$ an der Oberfläche des Messobjektes 8 reflektiert worden ist. Es zeigt sich, dass entsprechend der Kompensation der in dem Modulationsinterferometer 2 gebildeten Wegdifferenz $\Delta L$ durch die Messsonde 3 lediglich die zurücklaufenden Strahlungsanteile $r_1(t)$ und $r_2(t)$ innerhalb der Kohärenzlänge liegen und miteinander interferieren.

Die objektseitige Austrittsfläche 3.4 des Faserabschnittes 3.2 ist bei dem Ausführungsbeispiel nach Fig. 3 vorzugsweise unter einem Winkel von 45° bezüglich der optischen Sondenachse 3.5 geneigt. Auf der Austrittsfläche 3.4 ist eine reflektierende metallische oder dielektrische Beschichtung aufgebracht. Die Strahlung wird auf diese Weise im Wesentlichen rechtwinklig abgelenkt und auf die umgebende Oberfläche des Objekts gelenkt und die von der Oberfläche reflektierte Strahlung tritt über die Austrittsfläche 3.4 wieder in die Lichtleitfaser ein.

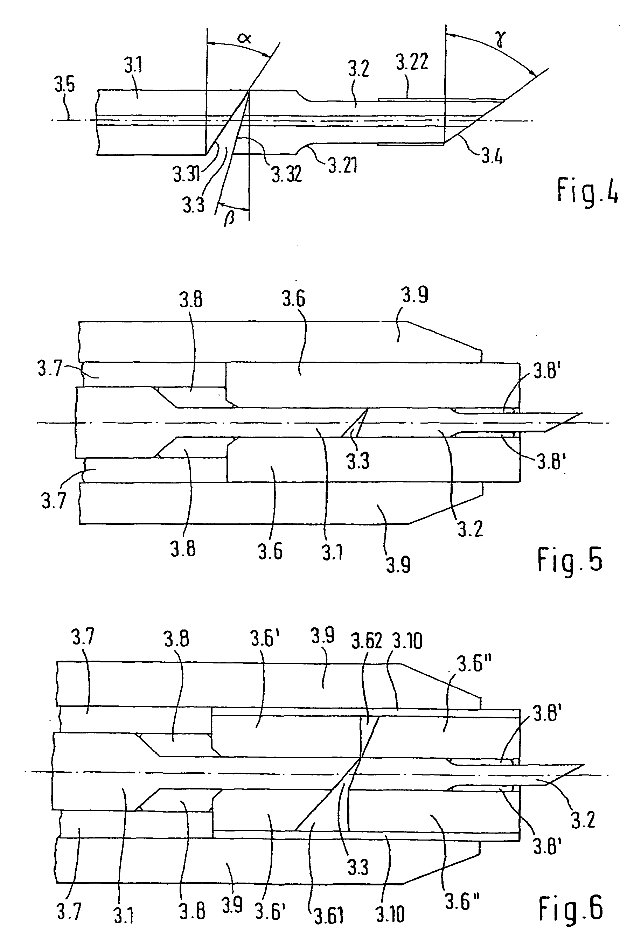

Wie die Fig. 4 bis 6 zeigen, ist der teildurchlässige Bereich 3.3 zwischen der Austrittsfläche 3.31 der Sondenfaser 3.1 und der Eintrittsfläche 3.32 des Faserabschnittes 3.2 durch eine Neigung der Austrittsfläche 3.31 um einen Winkel $\alpha$ bezüglich der Normalen der Sondenachse 3.5 und durch eine Neigung der Eintrittsfläche 3.32 des Faserabschnittes 3.2 um einen Winkel $\beta$ bezüglich der Normalen der Sondenachse 3.5 gebildet, wobei der Winkel $\alpha$ größer ist als der Winkel $\beta$ und sich ein keilförmiger Spalt zwischen der Austrittsfläche 3.31 und der Eintrittsfläche 3.32 ergibt. Die Ausrichtung der Neigung bezüglich der Normalen ist bei der Austrittsfläche 3.31 und der Eintrittsfläche 3.32 im Längsschnitt in gleicher Weise zum Objekt hin orientiert. Der Winkel $\alpha$ der Austrittsfläche 3.31 ist so gewählt, dass der Strahlungsstrom der Fresnel-Reflexion auf der Austrittsfläche 3.31 nicht durch die Sondenfaser 3.1 geführt wird. Für eine monomode Lichtleitfaser mit einer nummerischen Apertur von 0,12 beträgt der Winkel $\alpha$ vorteilhaft etwa 6°. Der Winkel $\beta$ ist so gewählt, dass der Strahlungsstrom der Fresnel-Reflexion auf die Eintrittsfläche 3.32 des Faserabschnittes 3.2 durch die Sondenfaser 3.1 geführt wird, wobei das Ausmaß des Strahlungsstromes berücksichtigt wird, das in die Sondenfaser 3.1 eingekoppelt werden soll. Wenn der Winkel $\beta$ gleich 0 ist, beträgt die Kopplungsrate etwa 3,6 %. Wenn der Winkel $\beta$ gegen den Winkel $\alpha$ geht, strebt der Kopplungsgrad gegen 0. Wenn der Winkel $\beta$ gegen den Winkel $\alpha$ strebt, geht die Transmission für diesen Übergang und eine zurückkehrende Strahlung gegen 86 %. Ist hingegen der Winkel $\beta$ gleich

0, beträgt die Transmission etwa 60 %. Eine nummerische Apertur von 0,12 ergibt sich z.B. bei einer Wellenlänge von 1.550 nm und einem Durchmesser von 10,4 $\mu$m. Der Winkel $\alpha$ sollte nicht kleiner als etwa 5° gewählt werden.

Die Reflexionsbehandlung der Austrittsfläche 3.4 des Faserabschnittes 3.2 kann verringert oder vermieden werden, wenn der Austrittswinkel $\gamma$ zum Erreichen einer Totalreflexion an der Austrittsfläche 7 vergrößert wird. Dies ist z.B. bei einer monomoden Lichtleitfaser mit einer nummerischen Apertur von 0,12 bei einem Austrittswinkel $\gamma$ oberhalb von 48° der Fall.

Auf dem objektseitigen Endbereich des Faserabschnittes 3.2 kann auf der Außenbehandlung (cladding) eine Antireflexionsbehandlung 3.22 vorgenommen werden, um die Empfindlichkeit gegenüber der Fresnel-Reflexion zu verringern oder der Austrittswinkel $\gamma$ kann soweit vergrößert werden, dass der Strahlungsstrom dieser Reflexion nicht mehr in den Faserabschnitt 3.2 eingekoppelt wird.

Wie Fig. 5 zeigt, können die Sondenfaser 3.1 und der Faserabschnitt 3.2 in derselben röhrchenartigen Aufnahme 3.6 aufgenommen und in Kontakt gebracht werden. Die Aufnahme 3.6 ist die gleiche, wie sie für Verbinder monomoder Lichtleitfasern verwendet wird. Die Aufnahme 3.6 ist in einen sie umgebenden Tubus 3.9 der Messsonde 3 eingesetzt. Im Inneren des Tubus 3.9 befindet sich auf der objektabgelegenen Stirnseite der Aufnahme 3.6 anschließend ferner ein Positionierstück 3.7 für die Führung und Vorjustierung der Sondenfaser 3.1. Der Faserabschnitt 3.2 ist im Inneren der Aufnahme mittels Klebers 3.8' fixiert, während die Sondenfaser 3.1 in der Aufnahme 3.6 und/oder dem Positionierstück 3.7 mittels Klebers 3.8 fixiert ist.

Eine andere Vorgehensweise zum Ausrichten und Festlegen der Sondenfaser 3.1 und des Faserabschnittes 3.2 in der Sonde 3 ist in Fig. 6 gezeigt. Die Sondenfaser 3.1 wird in einen hinteren Abschnitt 3.6' der röhrchenförmigen Aufnahme 3.6 eingeführt und die vordere Stirnseite des Aufnahmenabschnittes 3.6' und der Austrittsfläche 3.31 der Sondenfaser 3.1 werden im gewünschten Winkel poliert, wobei die vordere Stirnseite im Bereich der vordersten Kante der Sondenfaser 3.1 normal zur optischen Achse 3.5 der Sondenfaser 3.1 gerichtet ist. Entsprechend wird die hintere Stirnseite eines vorderen Abschnittes 3.6" der Aufnahme 3.6 entsprechend der gewünschten Eintrittsfläche 3.32 des Faserabschnittes 3.2 poliert, wobei der an den hintersten Rand des Faserabschnittes 3.2 angrenzende Bereich der hinteren Stirnseite des vorderen Abschnittes 3.6" der Aufnahme 3.6 normal zur optischen Achse 3.5 der Sondenfaser 3.1 ausgerichtet ist. Zwischen dem hinteren Abschnitt 3.6' und dem vorderen Abschnitt 3.6" der Aufnahme 3.6 ergibt sich dabei im Längsschnitt die in Fig. 6 gezeigte Anordnung. Die beiden Abschnitte 3.6' und 3.6" der Aufnahme 3.6 werden zueinander mit einem aufgebrachten, z.B. geschlitzten Haltering 3.10 axial ausgerichtet und in den Tubus 3.9 eingesetzt. In dem Tubus 3.9 ist desweiteren wiederum an die hintere Stirnseite der Aufnahme 3.6 angrenzend ein konzentrisches Positionierstück 3.7 zum Justieren und Vorfixieren der Sondenfaser 3.1 eingesetzt, wie bei dem Ausführungsbeispiel nach Fig. 5. Auch die Fixierung der Sondenfaser 3.1 und des Faserabschnittes 3.2 mittels Klebers 3.8, 3.8' erfolgt entsprechend dem Ausführungsbeispiel nach Fig. 5, wobei der Faserabschnitt 3.6 in dem vorderen Abschnitt 3.6" der Aufnahme 3.6 festgelegt wird.

Es ist auch möglich, die Abschnitte 3.6' und 3.6" der Aufnahme 3.6 dadurch auszurichten, dass sie in ein V-förmiges Profil eingebracht werden. Dadurch, dass die beiden Abschnitte 3.6', 3.6" der Aufnahme 3.6 getrennt eingebracht werden, kann das äußerste Ende der Messsonde 3 unbeweglich und entsprechend der Eigenschaft des Messobjektes geändert werden, wobei dieselbe Sondenfaser 3.1 beibehalten wird.

Wie die Fig. 4 bis 6 desweiteren zeigen, ist der äußere Abschnitt des Faserabschnittes 3.2 in seinem Durchmesser reduziert, so dass er auch in enge Löcher eines Messobjektes 8 eingeführt werden kann, deren Durchmesser weniger als 130 μm beträgt. Üblicherweise beträgt der Durchmesser einer monomoden Lichtleitfaser mit Außenbehandlung (cladding) 125 μm. Der Durchmesser kann mittels chemischer Behandlung mit einer entsprechenden Säure oder Hitzebehandlung verringert werden, um eine gewünschte Verjüngung 3.21 zu erhalten. Die antireflektierende Behandlung 3.22 ist dann im Bereich des Abschnittes geringeren Durchmessers vorgenommen. Auch diese Maßnahmen tragen dazu bei, zuverlässige Messungen auch in engen Vertiefungen eines Messobjektes 8 vornehmen zu können.

**Patentansprüche**

1. Interferometrische Messvorrichtung zum Erfassen der Form, der Rauheit oder des Abstandes der Oberfläche eines Messobjektes (8) mit einem Modulationsinterferometer (2), dem von einer Strahlungsquelle (1) kurzkohärente Strahlung zugeführt wird und das einen ersten Strahlteiler (2.3) zum Aufteilen der zugeführten Strahlung in einen über einen ersten Arm geführten ersten Teilstrahl (2.1) und einen über einen zweiten Arm geführten zweiten Teilstrahl (2.1') aufweist, von denen der eine gegenüber dem anderen mittels einer Modulationseinrichtung (2.2, 2.2') in seiner Licht-Phase oder Lichtfrequenz verschoben wird und eine Verzögerungsstrecke (2.9') durchläuft, und die anschließend an einem weiteren Strahlteiler (2.10) des Modulationsinterferomters (2) vereinigt werden, mit einer von dem Modulationsinterferometer (2) räumlich getrennten und mit dieser über eine Lichtleitfaseranordnung (6) gekoppelten oder koppelbaren Messsonde (3), in der die vereinigten Teilstrahlen in einem gemeinsamen Arm in einem teildurchlässigen Bereich (3.3) in einen Messstrahl und einen Referenzstrahl aufgeteilt und in der der an der Oberfläche reflektierte Messstrahl ($r_1(t)$) und der an einer Referenzebene reflektierte Referenzstrahl ($r_2(t)$) überlagert werden, und mit einer Empfängervorrichtung (4) und einer Auswerteeinheit (5) zum Umwandeln der ihr zugeleiteten Strahlung in elektrische Signale und zum Auswerten der Signale auf der Grundlage einer Phasendifferenz,
   **dadurch gekennzeichnet,**
   **dass** der teildurchlässige Bereich (3.3) mittels einer bezüglich der optischen Sondenachse (3.5) unter einem Austrittswinkel (α) schrägen Austrittsfläche (3.31) einer Sondenfaser (3.1) und einer ebenfalls bezüglich der optischen Sondenachse (3.5) unter einem Eintrittswinkel (β) schrägen Eintrittsfläche (3.32) eines objektseitig folgenden Faserabschnitts (3.2) gebildet ist, wobei zwischen der Austrittsfläche (3.31) und der Eintrittsfläche (3.32) ein keilförmiger Spalt gebildet ist.

2. Vorrichtung nach Anspruch 1,
   **dadurch gekennzeichnet,**
   **dass** die Austrittsfläche (3.31) und die Eintrittsfläche (3.32) in gleicher Richtung bezüglich der Sondenachse (3.5) geneigt sind.

3. Vorrichtung nach Anspruch 1 oder 2,
   **dadurch gekennzeichnet,**
   **dass** der Austrittswinkel (α) und der Eintrittswinkel (β) so gewählt sind, dass eine Fresnel-Reflexion bewirkt wird.

4. Vorrichtung nach einem der vorhergehenden Ansprüche,
   **dadurch gekennzeichnet,**
   **dass** der Austrittswinkel (α) zwischen 5° und 8° und der Eintrittswinkel (β) zwischen α und 0° beträgt.

5. Vorrichtung nach einem der vorhergehenden Ansprüche,
   **dadurch gekennzeichnet,**
   **dass** die Sondenfaser (3.1) und der Faserabschnitt (3.2) in einer röhrchenförmigen Aufnahme (3.6; 3.6', 3.6") axial ausgerichtet aufgenommen sind, die von einem äußeren Tubus (3.9) der Messsonde (3) umgeben ist.

6. Vorrichtung nach Anspruch 5,
   **dadurch gekennzeichnet,**
   **dass** auf der von dem Messobjekt (8) abgelegenen Stirnseite der Aufnahme (3.6; 3.6') ein die Sondenfaser (3.1) umgebendes, ebenfalls zu dem Tubus (3.9) konzentrisch aufgenommenes Positionierstück (3.7) vorgesehen ist und
   **dass** der Faserabschnitt (3.2) in dem objektseitigen, vorderen Teil der Aufnahme (3.6; 3.6") und die Sondenfaser (3.1) in dem objektabgelegenen, hinteren Teil der Aufnahme (3.6; 3.6') und/oder dem Tubus (3.9) fixiert ist.

7. Vorrichtung nach Anspruch 6,
**dadurch gekennzeichnet,**
**dass** der vordere Teil der Aufnahme (3.6") von dem hinteren Teil der Aufnahme (3.6') durch diametral gegenüberliegende Spalte (3.61, 3.62) getrennt ist, wobei der eine Spalte (3.61) rückseitig in Verlängerung der schrägen Austrittsfläche (3.31) der Sondenfaser (3.1) und der andere Spalt (3.62) vorderseitig in der Verlängerung der schrägen Eintrittsfläche (3.32) begrenzt sind, und
**dass** der vordere Teil (3.6") und der hintere Teil (3.6') der Aufnahme von einem gemeinsamen hülsenförmigen Haltering (3.10) umgeben sind, der auf seiner Außenseite von dem Tubus (3.9) umgeben ist.

8. Vorrichtung nach einem der vorhergehenden Ansprüche,
**dadurch gekennzeichnet,**
**dass** ein vorderer Abschnitt des Faserabschnittes (3.2) gegenüber dessen hinterem Abschnitt einen geringeren Durchmesser besitzt.

9. Vorrichtung nach einem der vorhergehenden Ansprüche,
**dadurch gekennzeichnet,**
**dass** eine objektseitige Austrittsfläche (3.4) des Faserabschnittes (3.2) unter einem Austrittswinkel (γ) von mindestens 46° gegenüber der Achsnormalen geneigt ist.

10. Vorrichtung nach einem der vorhergehenden Ansprüche,
**dadurch gekennzeichnet,**
**dass** das Modulationsinterferometer (2) zumindest teilweise eine polarisationserhaltende lichtleitende Struktur (2.11, 2.11', 2.12, 2.12') in Form eines optischen Faserleiters oder einer integrierten Optik aufweist, wobei die lichtleitende Struktur (2.11, 2.11' 2.12, 2.12') zumindest eines Arms aufgetrennt ist.

**Revendications**

1. Dispositif de mesure interférométrique pour saisir la forme, la rugosité ou la distance de la surface d'un objet de mesure (8) à l'aide d'un interféromètre à modulation (2) qui reçoit d'une source de rayonnement (1), un rayonnement cohérent court, et qui présente un premier séparateur de faisceau (2.3) pour séparer le faisceau reçu en un premier faisceau partiel (21) guidé par un premier bras et en un deuxième faisceau partiel (2.1') guidé par un deuxième bras, et dont le premier est décalé par rapport à l'autre, au moyen d'un dispositif de modulation (2.2, 2.2'), dans sa phase lumineuse ou sa fréquence lumineuse, et traverse un trajet de retard (2.9'), les deux faisceaux partiels étant ensuite réunis au niveau d'un autre séparateur de faisceau (2.10) de l'interféromètre à modulation (2), comprenant une sonde de mesure (3) séparée spatialement de l'interféromètre à modulation (2) et couplée ou pouvant être couplée à celui-ci par un dispositif à fibres optiques (6), sonde de mesure dans laquelle les faisceaux partiels réunis sont répartis dans un bras commun dans une zone partiellement transparente (3.3) en un faisceau de mesure et en un faisceau de référence, et dans laquelle le faisceau de mesure réfléchi sur la surface ($r_1(t)$) et le faisceau de référence réfléchi au niveau d'un plan de référence ($r_2(t)$) sont superposés, et comprenant un dispositif de réception (4) et une unité d'exploitation (5) destinée à convertir le rayonnement reçu en signaux électriques et à exploiter les signaux sur la base d'une différence de phase,
**caractérisé en ce que**
la zone partiellement transparente (3.3) est formée au moyen d'une surface de sortie (3.31) d'une fibre de sonde (3.1) oblique formant un angle de sortie (α) par rapport à l'axe de sonde optique (3.5), et d'une surface d'entrée (3.32) d'une section de fibre (3.2) suivante côté objet également oblique formant un angle d'entrée (β) par rapport à l'axe de sonde optique (3.5), avec une fente en forme de coin entre la surface de sortie (3.31) et la surface d'entrée (3.32).

2. Dispositif selon la revendication 1,
**caractérisé en ce que**
la surface de sortie (3.31) et la surface d'entrée (3.32) sont inclinées dans la même direction par rapport à l'axe de sonde (3.5).

3. Dispositif selon la revendication 1 ou 2,
**caractérisé en ce que**
l'angle de sortie (α) et l'angle d'entrée (β) sont choisis de manière à provoquer une réflexion de Fresnel.

4. Dispositif selon l'une des revendications précédentes,
**caractérisé en ce que**
l'angle de sortie (α) est compris entre 5° et 8° et l'angle d'entrée (β) est compris entre α et 0°.

5. Dispositif selon l'une des revendications précédentes,
**caractérisé en ce que**
la fibre de sonde (3.1) et la section de fibre (3.2) sont logées de façon orientées en direction axiale dans un logement tubulaire (3.6 ; 3.6', 3.6") entouré par un tube extérieur (3.9) de la sonde de mesure (3).

6. Dispositif selon la revendication 5,
**caractérisé en ce qu'**
il est prévu sur le côté frontal du logement (3.6 ; 3.6') opposé à l'objet de mesure (8) une pièce de positionnement (3.7) entourant la fibre de sonde (3.1) et également logée de façon concentrique par rapport au tube (3.9) et la section de fibre (3.2) est fixée dans la partie avant du logement (3.6 ; 3.6") côté objet tandis que la fibre de sonde (3.1) est logée dans la partie arrière du logement (3.6 ; 3.6') opposée à l'objet et/ou dans le tube (3.9).

**7.** Dispositif selon la revendication 6, **caractérisé en ce que**
la partie avant du logement (3.6") est séparée de la partie arrière du logement (3.6') par des fentes diamétralement opposées (3.61, 3.62), la première fente (3.61) étant limitée à l'arrière dans le prolongement de la surface de sortie oblique (3.31) de la fibre de sonde (3.1) tandis que l'autre fente (3.62) est limitée à l'avant dans le prolongement de la surface d'entrée oblique (3.32), et
la partie avant (3.6") et la partie arrière (3.6') du logement sont entourées par une bague de maintien (3.10) commune en forme de douille, qui est entourée sur son côté extérieur par le tube (3.9).

**8.** Dispositif selon l'une des revendications précédentes,
**caractérisé en ce qu'**
une section avant de la section de fibre (3.2) possède par rapport à sa section arrière un diamètre plus faible.

**9.** Dispositif selon l'une des revendications précédentes,
**caractérisé en ce qu'**
une surface de sortie côté objet (3.4) de la section de fibre (3.2) est inclinée par rapport à la normale axiale en formant un angle de sortie ($\gamma$) d'au moins 46°.

**10.** Dispositif selon l'une des revendications précédentes,
**caractérisé en ce que**
l'interféromètre à modulation (2) présente au moins partiellement une structure conductrice de lumière polarisable (2.11, 2.11', 2.12, 2.12') ayant la forme d'un conducteur à fibres optiques ou d'une optique intégrée, la structure conductrice de lumière (2.11, 2.11', 2.12, 2.12') d'au moins un bras étant séparée.

**Claims**

**1.** Interferometric measuring device for detecting the shape, the roughness or the distance of the surface of a measurement object (8) with the aid of a modulation interferometer (2) to which short-coherence radiation is fed from a radiation source (1), and which has a first beam splitter (2.3) for splitting the fed radiation into a first component beam (2.1) guided via a first arm, and a second component beam (2.1') guided via a second arm, of which the light phase and light frequency of one is displaced by comparison with the other by means of a modulation device (2.2, 2.2') and traverses a delay path (2.9'), and which are subsequently united at a further beam splitter (2.10) of the modulation interferometer (2), having a measuring probe (3), which is spatially separate from the modulation interferometer (2) and is or can be coupled to the latter via an optical fibre arrangement (6) in which the united component beams are split in a common arm in a partially transmitting region (3.3) into a measuring beam and a reference beam, and in which the measuring beam ($r_1(t)$) reflected at the surface, and the reference beam ($r_2(t)$) reflected at a reference plane are superimposed, and having a receiver device (4) and an evaluation unit (5) for converting the radiation fed to it into electric signals and for evaluating the signals on the basis of a phase difference, **characterized in that** the partially transmitting region (3.3) is formed by means of an exit surface (3.31) of a probe fibre (3.1) which is at an oblique exit angle ($\alpha$) with reference to the optical probe axis (3.5), and by means of an entry surface (3.32) of a fibre section (3.2) following an the object side which is likewise at an oblique entry angle ($\beta$) with reference to the optical probe axis (3.5), a wedge-shaped gap being formed between the exit surface (3.31) and the entry surface (3.32).

**2.** Device according to Claim 1, **characterized in that** the exit surface (3.31) and the entry surface (3.32) are inclined in the same direction with reference to the probe axis (3.5).

**3.** Device according to Claim 1 or 2, **characterized in that** the exit angle ($\alpha$) and the entry angle ($\beta$) are selected so as to effect a Fresnel reflection.

**4.** Device according to one of the preceding claims, **characterized in that** the exit angle ($\alpha$) is between 5° and 8°, and the entry angle ($\beta$) is between $\alpha$ and 0°.

**5.** Device according to one of the preceding claims, **characterized in that** the probe fibre (3.1) and the fibre section (3.2) are held in an axially aligned fashion in a tubular receptacle (3.6; 3.6', 3.6") which is surrounded by an outer tube (3.9) of the measuring probe (3).

**6.** Device according to Claim 5, **characterized in that** a positioning piece (3.7) surrounding the probe fibre (3.1) and likewise held concentrically with the tube (3.9) is provided on the end face of the receptacle (3.6; 3.6') remote from the measurement object (8), and **in that** the fibre section (3.2) is fixed in the object-side, front part of the receptacle (3.6; 3.6") and the probe fibre (3.1) is fixed in the rear part, remote from the object, of the receptacle (3.6; 3.6') and/or the tube (3.9).

7. Device according to Claim 6, **characterized in that** the front part of the receptacle (3.6") is separated from the rear part of the receptacle (3.6') by diametrically opposite gaps (3.61, 3.62), one gap (3.61) being delimited at the rear in an extension of the oblique exit surface (3.31) of the probe fibre (3.1), and the other gap (3.62) being limited at the front in the extension of the oblique entry surface (3.32), and **in that** the front part (3.6") and the rear part (3.6') of the receptacle are surrounded by a common sleeve-shaped holder (3.10) which is surrounded on its outside by the tube (3.9).

8. Device according to one of the preceding claims, **characterized in that** a front section of the fibre section (3.2) has a smaller diameter by comparison with its rear section.

9. Device according to one of the preceding claims, **characterized in that** an object-side exit surface (3.4) of the fibre section (3.2) is inclined to the normal to the axis at an exit angle ($\gamma$) of at least 46°.

10. Device according to one of the preceding claims, **characterized in that** the modulation interferometer (2) has at least in part a polarization-maintaining light-guiding structure (2.11, 2.11', 2.12, 2.12') in the form of an optical fibre guide or an integrated optics, the light-guiding structure (2.11, 2.11', 2.12, 2.12') of at least one arm being separated.

Fig.1

Fig.2

Fig.3

Fig.4

Fig.5

Fig.6